# EUROPEAN PATENT SPECIFICATION

(11) **EP 1 799 730 B1**
(45) Date of publication and mention of the grant of the patent: **12.05.2010**
(21) Application number: 05782692.7
(22) Date of filing: 03.08.2005
(51) Int. Cl.: C08F 297/04, C08L 53/02, C08L 25/06

(54) **ASYMMETRIC LINEAR TAPERED MONOALKENYL ARENE-CONJUGATED DIENE BLOCK COPOLYMERS**
ASYMMETRISCHE LINEARE GRADIENTEN-BLOCKCOPOLYMERE AUS EINEM MONOALKENYLAREN UND EINEM KONJUGIERTEN DIEN
COPOLYMERES SEQUENCES LINEAIRES A GRADIENT ET ASYMETRIQUES DE DIENE ET D'ARENE MONOALCENYLE

(30) Priority: 27.09.2004 US 613606 P
(43) Date of publication of application: 27.06.2007
(73) Proprietor: DOW GLOBAL TECHNOLOGIES INC., Midland MI 48674 (US)
(72) Inventor: TONEY, Kenneth, A., Baton Rouge, LA 70816 (US); MECCA, Jodi, M., Midland, MI 48642 (US)
(74) Representative: Raynor, John
(86) International application number: PCT/US2005/027768
(87) International publication number: WO 2006/036301

(56) References cited:
- US-A- 4 603 155
- US-A- 4 939 208
- US-B1- 6 265 485
- US-B1- 6 521 712

## Description

This invention relates generally to tapered monoalkenyl arene-conjugated diene block copolymers, particularly to asymmetric tapered monoalkenyl arene-conjugated diene-monoalkenyl arene block copolymers and more particularly to uncoupled asymmetric tapered monoalkenyl arene-conjugated diene-monoalkenyl arene block copolymers. This invention also relates to blends of such block copolymers with monoalkenyl arene polymers, such as a polystyrene resin, and, optionally, a monoalkenyl arene-conjugated diene block copolymer, especially a styrene-butadiene diblock copolymer. This invention further relates to the use of such blends to make oriented polystyrene (OPS) sheets, particularly thermoformable OPS sheets and resulting thermoformed articles of manufacture.

Thermo formed OPS sheet has a number of conventional end use applications, one of which is as a domed cover for cake and other bakery items. A combination of clarity and toughness at room temperature (nominally 25°C) favor use of such domed covers for fresh baked goods.

US-A-4939208 discloses a resinous block copolymer of a conjugated diene and monovinyl-substituted aromatic represented by the structure S1-B1-B/S-S2 containing 60-95 percent by weight of monovinyl-substituted aromatic units. The copolymer can be mixed with other polymers such as crystal polystyrene and used in the manufacture of thermoformed articles from extruded sheets.

Due to shelf life limitations for fresh baked goods, many users, especially large commercial bakers or companies with a central baking facility and a network of retail stores, desire to freeze baked goods in a display container with a clear, domed cover and ship the frozen baked goods in such containers to their retail stores or a consumer outlet. Although thermoformed OPS sheet performs well at room temperature, it has a marked tendency toward brittle failure at freezer temperatures (nominally 0°C to -40°C). Brittle failure reduces marketability of the baked goods presented in such containers and causes many retailers to discard the containers and their contents.

These users desire a modified, thermoformed OPS sheet with a markedly reduced tendency toward brittle failure to minimize lost sales opportunities as well as avoid increased costs and lost profits that necessarily follow when one discards the containers and their contents. One way of delivering a reduced tendency toward brittle failure is to increase impact resistance.

A first aspect of this invention is an asymmetric, tapered monoalkenyl arene- conjugated diene-monoalkenyl arene block copolymer having a molecular weight within a range of from 5,000 to 20,000, B is a polymer block that has a first segment that comprises, preferably consists essentially of and more preferably consists of polymerized conjugated diene (for example, isoprene, butadiene or both isoprene and butadiene) and a second segment that is tapered and comprises a polymerized combination of both conjugated diene and monoalkenyl arene, the tapered segment including from greater than 0 to 50 percent by weight of all monoalkenyl arene contained in the block copolymer, polymer block B having a molecular weight within a range of from 28,000 to 212,500, and A' is a second polymer end block of polymerized monoalkenyl arene, end block A' having a molecular weight within a range of from 25,000 to 157,500, the block copolymer having an overall molecular weight within a range of from 80,000 to 250,000, and a monoalkenyl arene, preferably styrene, content within a range of from 30 to 55 percent by weight, based on copolymer weight. The block copolymers of this aspect are preferably free of coupling agent moieties or coupling agent residuals.

A second aspect of this invention is a polymer blend composition, the composition comprising a polystyrene resin, a styrene-butadiene block copolymer and the asymmetric, tapered monoalkenyl arene-conjugated diene-monoalkenyl arene block copolymer of the first aspect, the blend composition having a clarity, measured in accord with ASTM D 1925. (similar to ASTM D 1003) of at least 50 percent. The blend composition also desirably has a "practical toughness", as measured by its ability to be thermoformed into containers with hinges and corners that resist cracking, and that gives a "deep thump sound" like polyethyleneterephthalate (PET) containers when struck rather than a sharp brittle polystyrene sound.

The asymmetric, tapered block copolymers (ATBC) of the present invention can be used neat or blended with at least one monoalkenyl arene polymer such as polystyrene, a styrene-conjugated diene (for example, butadiene and/or isoprene) copolymer or a combination of polystyrene and a styrene-conjugated copolymer to produce a resinous blend that can be formed into articles with advantageous impact properties, ductility or both relative to articles formed from a 50/50 weight/weight blend of polystyrene and a styrene-butadiene block copolymer. The articles also have a greater clarity (lower haze) than articles prepared from identical blend compositions save for substituting an asymmetric block copolymer, a symmetric block copolymer or a tapered block copolymer for the ATBCs of the present invention.

For example, injection molded blends of 50 percent by weight (wt percent) styrene-butadiene copolymer / 50 wt percent polystyrene have a measured 97 pound (lb) (44 kilogram (kg)) peak load and 18 inch-pounds (in-lb) (2.0 Newton-meters (N*m)) total energy to break on impact, whereas injection molded blends of 25 wt percent styrene-butadiene copolymer (SBC) / 64.6 wt percent polystyrene (PS) / 10.4 wt percent asymmetric tapered styrene-butadiene-styrene block copolymer (A-T-SBS) measured 209 lb (95 kg) peak load and 33 in-lb (3.7 N*m) total energy to break on impact, even though both blends contained the same calculated percent total diene. The foregoing weight percentages are based on blend weight. This represents a 115 percent increase in peak load and an 83 percent increase in total energy to break on impact for the blend containing the A-T-SBS block copolymer.

As a further example, injection molded blends of 25 wt percent SBC / 64.6 wt percent PS / 10.4 wt percent A-T-SBS, based on blend weight, have a measured haze of 34 percent for 60 mil (25.4 micrometers (µm)) thick parts. This contrasts with respective haze values of 62, 87, and 88 percent for parts of the same thickness when A-T-SBS is replaced by the same percent of asymmetric untapered styrene-butadiene-styrene block copolymer (A-SBS), symmetric tapered styrene-butadiene-styrene block copolymer (T-SBS), and symmetric untapered styrene-butadiene-styrene block copolymer (SBS) respectively.

The ATBCs of the present invention have two terminal polymerized monoalkenyl arene blocks of differing weight average molecular weights (Mw). One terminal or end block, nominally block A, has a Mw that ranges from 5,000 to 20,000, preferably from 7,000 to 15,000 and more preferably from 7,000 to 12,000. If the Mw of block A is too small, for example, less than 5,000, the resulting block copolymer tends to have an excessively low tensile strength, a factor that limits use of the block copolymer. If the Mw of block A is too large, for example, more than 20,000, it becomes increasingly difficult to attain a desired degree of asymmetricity. A second terminal or end block, nominally block A', has a Mw that ranges from 25,000 to 157,500, preferably from 25,000 to 90,000 and more preferably from 25,000 to 60,000. If the Mw of block A' is too low, one again encounters difficulty in attaining a desired degree of asymmetricity (difference in molecular weights). If the Mw of block A' is too high, block copolymer Mw tends to be excessively high and block copolymer melt flow rate tends to be undesirably low.

At least 50 wt percent, but less than 100 wt percent, based on block copolymer weight, of all monoalkenyl arene contained in the block copolymer is disposed in terminal blocks A and A'. The amount of monoalkenyl arene, preferably styrene, contained in terminal blocks A and A' is preferably from 85 wt percent to 99 wt percent, more preferably from 94 wt percent to 98 wt percent, in both cases based on total block copolymer monoalkenyl arene content.

The ATBCs of the present invention also have a central or mid block, nominally block B, that includes two segments. A first segment, nominally disposed proximate to end block A and distant from end block A', comprises, preferably consists essentially of, and more preferably consists of polymerized conjugated diene. A second segment, nominally disposed between the first segment and end block A', comprises or contains, preferably consists essentially of and more preferably consists of, both monoalkenyl arene and conjugated diene. The second segment is tapered in that it contains both monoalkenyl arene and conjugated diene with conjugated diene content in any polymer segment decreasing as polymerization progresses from the first segment to end block A'. Mid block B has a Mw that ranges from greater than 28,000 to 210,000, preferably from 45,000 to 135,000 and more preferably from 55,000 to 90,000.

The ATBCs of the present invention have an overall Mw that ranges from 80,000 to 250,000, preferably from 100,000 to 180,000 and more preferably from 110,000 to 130,000. If the Mw is too low, for example, less than 80,000, polymer recovery by way of steam stripping requires use of an anti-agglomeration aid such as talc. The presence of talc or another particulate anti-agglomeration aid interferes with clarity in articles of manufacture fabricated from the asymmetric tapered block copolymers of the present invention when used either neat or in combination with one or more other polymers and additives. If the Mw is too high, for example, more than 250,000, block copolymer melt flow rates tend to be too low for satisfactory melt processing or melt blending.

The ATBCs of the present invention have an overall monoalkenyl arene, preferably styrene, content that ranges from 30 wt percent to 55 wt percent, based on total block copolymer weight. The balance of block copolymer weight comprises conjugated diene. The monoalkenyl arene content preferably ranges from 35 wt percent to 50 wt percent, based on total block copolymer weight. If the overall monoalkenyl arene content is too low, for example, less than (<) 30 wt percent, difficulties arise in attaining a desired asymmetricity or difference in end block molecular weights. If the overall monoalkenyl arene content is too high, for example, more than (>) 65 wt percent, the resulting block copolymer begins to resemble those monoalkenyl arene-conjugated diene block copolymers, typically diblock copolymers, such as K-Resin™ from Chevron Phillips Chemical Company, in terms of performance as a modifier in polymer blends. While isoprene may be substituted for butadiene in making a block copolymer of the present invention, a blend of such an isoprene-containing block copolymer with a styrene-butadiene diblock copolymer does not necessarily have a Food and Drug Administration (FDA) clearance equal to that of a blend of a butadiene-containing block copolymer with a styrene-butadiene diblock copolymer.

The second or tapered segment of mid block B is non-random in that it results from a process that lacks a randomizer such as a polar compound (for example, an ether, a thioether or a tertiary amine), examples of which are disclosed in United States Patent Number (USP) 6,265,485 at column 3, lines 34-54.

The ATBCs of the present invention are also linear and non-coupled. "Non-coupled" means that the block copolymers are prepared in a sequential process, presented in more detail below, that does not use a difunctional or polyfunctional coupling agent such as divinyl benzene, tetrahalides such as silicon tetrachloride and others disclosed in USP 6,265,485 at column 3, line 55 through column 4, line 67. In other words, the block copolymers of the present invention are substantially free of, and more preferably are completely free of, coupling agent moieties or residuals.

Where ranges are stated in this Application, the ranges include both endpoints of the range unless otherwise stated.

As noted in USP 5,360,875 at column 1, lines 45-48, an "asymmetric" block copolymer is one in which terminal blocks have differing molecular weights.

USP 4,335,221 explains the meaning of "tapered" at column 5, line 59 through column 6, line 7. Because conjugated dienes polymerize substantially more rapidly than monoalkenyl arenes, when conjugated dienes and monoalkenyl arenes exist simultaneously in a polymerization mixture, as they do in preparation of mid block B of the asymmetric tapered block copolymers of the present invention, initial polymerization primarily involves conjugated dienes with only an occasional molecule of monoalkenyl arene. When nearly all of the conjugated diene in the polymerization mixture has been polymerized, polymerization of the monoalkenyl arene begins to occur at an ever increasing rate. At column 6, lines 2-7, the patentee estimates that > 70 wt percent, often > 80 wt percent of the monoalkenyl arene polymerizes after substantially all of the conjugated diene has been polymerized.

USP 5,290,862 teaches, at column 3, lines 34-39, that tapered copolymers may be produced by incremental adjustments in monomer feed to make the monomer feed richer or poorer with respect to a balance between conjugated diene and monoalkenyl arene.

The ATBCs of the present invention, for example, A-T-SBS block polymers, can be prepared by anionic polymerization, followed by capping or termination of the resulting living polymer. For purposes of the present specification the polymer, "living polymer" refers to the polymer being produced as it exists during an anionic polymerization process. Examples of sequential polymerization processes that result in living block polymers after completion of polymerization are known in the prior art and include US 5,242,984; US 5,750,623; and Holden; et. al. Thermoplastic Elastomers, 2nd Edition; pages 51-53, 1996.

Monomers useful in producing polymers of the present invention must be susceptible to anionic polymerization. These monomers, well known in the art, include, but are not limited to, monoalkenyl aromatic compounds, such as styrene and alphamethylstyrene, vinyltoluenes; vinylpyridine; and conjugated dienes, such as 1,3-butadiene, isoprene, and 1,3-pentadiene. Preferred monomers are styrene, and at least one of 1,3-butadiene and isoprene, with styrene and 1,3-butadiene being most preferred.

Alkali metal hydrocarbon initiators suitable for anionic polymerization are well known in the art. Examples of such initiators include, but are not limited to, lithium alkyls, sodium alkyls, and potassium alkyls. Preferred initiators are lithium alkyls, such as sec-butyllithium and n-butyllithium. USP 3,937,760, particularly at column 3, lines 33-50, is but one of many references that describe suitable initiators as compounds containing a carbon-lithium or carbon-sodium bond. The preferred initiators have a single functional site, such as a lithium atom, and do not have multiple functional sites, such as two in more commonly named difunctional initiators, or more than two in "polyfunctional" initiators.

Preparation of the tapered, linear asymmetric block copolymers of the present invention occurs by way of a polymerization process carried out in an inert hydrocarbon diluent at any suitable temperature within a range of from -10°C to 150°C, preferably from 0°C to 110°C, at pressures sufficient to maintain the reaction mixture substantially in a liquid state or phase, preferably from 5 to 50 pounds per square inch gauge (psig) (34.5 to 344.7 kilopascals (kPa)).

Temperatures and pressures will peak during polymerization of each monomer charge and then decrease when essentially no free monomer is left to react. Solvents or diluents suitable for the polymerization are also well known in the art. Examples included aromatic hydrocarbons, saturated aliphatic hydrocarbons, saturated cycloaliphatic hydrocarbons, linear ethers and cyclic ethers, and mixtures thereof. Desirable solvents or diluents include linear and cycloparaffins such as butane, pentane, hexane, octane, cyclohexane, cyclopentane, and mixtures thereof. Preferred solvents or diluents are cyclohexane, n-hexane, and isopentane, and mixtures thereof. Choices of diluent, temperature and pressure have a single goal in mind, to keep the resulting polymer in solution until polymerization is complete, living anions are terminated or capped, and the resulting polymer is ready for recovery.

Polymerization begins by contacting the monomer or monomers with an alkali metal hydrocarbon initiator in the inert solvent or diluent. General linear block copolymer polymerization involves sequentially adding different monomers to a polymerization reaction mixture. In a first step, provide a polymerization reaction mixture of a first portion of monoalkenyl arene monomer, an anionic polymerization initiator, typically an organmonoalkali metal compound such as n-butyllithium, and the inert solvent or diluent, and subject the polymerization reaction mixture to conditions of temperature and pressure, as outlined above, until substantially all of the monoalkenyl arene monomer is incorporated into a first intermediate partial polymer with an active, living end in the form of an alkali metal ion such as lithium in the case of an n-butyllithium initiator. In a second step, add a conjugated diene such as 1,3-butadiene, to the reaction mixture under conditions sufficient to polymerize the conjugated diene onto the living end of the first intermediate partial polymer to form a second intermediate partial polymer with an active, living end. In a third step, add a second portion of monoalkenyl arene monomer, preferably the same monoalkenyl arene as in the first portion of monoalkenyl arene, to the reaction mixture before reaching a point at which polymerization of conjugated diene is substantially complete and maintain the mixture under conditions sufficient to polymerize substantially all of the mixture of monomers onto the living end of the second intermediate partial polymer to yield an active living linear asymmetric tapered block copolymer. The second and third steps involve addition only of monomer(s) as contrasted to a mixture of monomer(s) and initiator, and, depending upon how much taper is desired, they can be combined by adding the diene and all the remaining monoalkenyl arene monomer at the same time. Recovery of the linear tapered block copolymer begins by adding a conventional catalyst-inactivating material such as water, an alcohol, an organic acid or an inorganic acid. Recovery continues via conventional procedures including precipitation for example, by adding further alcohol, filtration, decantation and steam stripping. If desired, the linear, asymmetric tapered block copolymer may be purified by conventional means including redissolution of the copolymer in a suitable solvent and recovering the polymer as before in a second recovery step.

The series of three steps detailed above yields a first end block of polymerized monoalkenyl arene, a midblock that has a first segment of polymerized conjugated diene and a second or tapered segment having polymerized therein both monoalkenyl arene and conjugated diene, and a second end block of polymerized monoalkenyl arene. The end blocks have different molecular weights. Skilled artisans recognize that one can control molecular weight of that portion of the second segment by choosing to add the second portion of monoalkenyl arene closer to the beginning of conjugated diene polymerization or the end of conjugated diene polymerization or at any point in between. Skilled artisans also recognize that conjugated dienes polymerize at a faster rate than monoalkenyl arenes and that, in the absence of a randomizer, the tapered segment will have sequences of conjugated diene interspersed with sequences of monoalkenyl arene of varying lengths until substantially all of the conjugated diene polymerizes. After polymerization of conjugated diene is substantially complete, polymerization of monoalkenyl arene continues to form the second end block that comprises, preferably consists solely of, polymerized monoalkenyl arene.

The ATBCs of the present invention are preferably unimodal or monomodal. In other words, the block copolymers of the present invention are substantially pure, at least in terms of molecular weight. This contrasts with a polymodal mixture of high, medium and low weight average molecular weight block copolymers produced by multiple additions of initiator and monomer as in USP 4,704,434.

While the polymer product is still in solution, stabilization agents can be added. Additional stabilizers can be added during finishing before pelletizing. This treatment will provide oxidative stability for the polymer during processing and handling and subsequent long term use by the customer.

Commonly used stabilization processes use a combination of compounds that includes, but is not limited to, a hindered phenol and an organophosphite, particular examples of which are octadecyl 3-(3',5'-di-t-butyl-4'-hydroxyphenyl) propionate and tris-nonylphenylphosphite.

After stabilization, flash hydrocarbon diluent from the polymer solution to increase the solids content. The polymer cement, that is, the polymer in the polymerization solvent, usually contains 10 wt percent to 40 wt percent, more usually 20 wt percent to 35 wt percent, polymer solids, based on total polymer cement weight.

Preferably, but not necessarily, the polymer cement is flashed to remove by evaporation a portion of the solvent so as to reduce the solvent content to a concentration of from 0 wt percent or as close to 0 wt percent as possible to 50 wt percent, more usually from 0 wt percent to 10 wt percent. This corresponds to a solids content of from 100 wt percent or nearly 100 wt percent to 50 wt percent, more usually from 100 wt percent to 90 wt percent based upon combined weight of recovered polymer and residual solvent.

Flashing of the polymer cement may be followed by desolventizing extrusion with vacuum in commercial production or by other vacuum processes to achieve a consistent solvent content of < 0.3 wt percent, based on polymer cement weight. Alternatively, and preferably, the solvent can be removed from the polymer cement in a steam stripping operation, where the polymer cement is added to a hot water tank where steam is introduced to flash off the solvent. The solvent is subsequently removed from the steam in another unit operation.

The block copolymers of the present invention can be, and normally are, compounded with anti-oxidants, anti-blocking agents, release agents and other additives, as known in the compounding arts.

The tapered, asymmetric block copolymers of the present invention are composed of a first end block that comprises polymerized monoalkenyl arene, preferably consists essentially of polymerized monoalkenyl arene and more preferably consists of polymerized monoalkenyl arene, a second end block that has a different molecular weight of the first end block comprises, preferably consists essentially of and more preferably consists of polymerized monoalkenyl arene, and a central or middle block that has two segments, a first segment that comprises, preferably consists essentially of, and more preferably consists of, polymerized conjugated diene and a second or tapered segment that comprises, more preferably consists essentially of and more preferably consists of, both monoalkenyl arene and conjugated diene in polymerized form. Preferred monomers include styrene as the monoalkenyl arene and butadiene as the conjugated diene.

Molecular weights are measured by Gel Permeation Chromatography (GPC), where the GPC system has been appropriately calibrated, for example, by using standards of similar polymers with known molecular weight.

For purposes of this specification, molecular weight means peak molecular weight as measured by size exclusion chromatography calibrated on polystyrene. Commercially-available polystyrene calibration standards were used and the molecular weights of copolymers corrected according to Runyon et al, J. Applied Polymer Science. Vol 13 Page 359 (1969) and Tung, L H J, Applied Polymer Science, Vol 24 Page 953 (1979).

A Hewlett-Packard Model 1090 chromatograph with a 1047A refractive index detector may be used for size exclusion chromatography. A preferred configuration has the chromatograph equipped with four 300 millimeter (mm) x 7.5 mm Polymer Laboratories SEC columns packed with five micrometer particles. The columns desirably include two columns with 10⁵ angstrom pore size particles, one column with 10⁴ angstrom pore size particles, and one with particles of mixed pore sizes. HPLC grade tetrahydrofuran (THF) with a flow of 1 ml/rnin may be used as a carrier solvent. Column and detector temperatures are preferably set at 40°C, and a run time of 45 minutes provides satisfactory results.

Use a JEOL Eclipse 400 FT NMR spectrometer to determine the taper of the polymer samples according to Sardelis et al, Polymer Volume 25, Page 1011 (1984). Basically, 0.100 gram (g) polymer sample is dissolved in 1.5 milliliters (ml) of NMR solvent consisting of 40 ml 1,1,2,2 tetrachloroethane d2, 100 ml tetrachloroethylene, and 0.1 ml NMR-grade tetramethylsilane. After dissolving the polymer sample, fill the NMR tube one-half full with this polymer solution. From the NMR spectra of the polymer solution, the area under the spectra at 7 parts per million (ppm) (Area 7) and 6.5 ppm (Area 6.5) are obtained. Percent taper is calculated by the formula 100*[2*(Area 7) - 3*(Area 6.5)]/[2*(Area 7) + 2*(Area 6.5)]

The ATBCs of the present invention are preferably linear triblock copolymers represented by a formula A--B--A', where A is a first polymer end block of a monoalkenyl arene, A' is a second polymer end block of a monoalkenyl arene, and B is a polymer block that has two segments, a first segment that comprises, preferably consists essentially of and more preferably consists of a conjugated diene and a second or tapered segment that comprises, preferably consists essentially of and more preferably consists of a polymerized combination of both monoalkenyl arene and conjugated diene. The monoalkenyl arene is preferably styrene and the conjugated diene is preferably butadiene.

In theory, a symmetric block copolymer has two styrene polymer blocks that are of the same, or nearly the same, molecular weight. In other words, a symmetric styrene-butadiene-styrene block copolymer with a molecular weight of 120,000 and a 40 percent styrene content, based on block copolymer weight, would have two polystyrene end blocks, each with a molecular weight of about 24,000, and a polybutadiene mid-block with a molecular weight of about 72,000. By way of contrast, an asymmetric A-B-A' block copolymer of the same molecular weight and styrene content would have, for example, an A block or polystyrene block with a molecular weight of about 10,000, the same 72,000 molecular weight polybutadiene midblock and an A' block with a molecular weight of about 38,000.

As used herein, "percent taper" refers to that percentage of total styrene monomer that is not polymerized into a pure polystyrene block. In other words, the styrene monomer that is not part of a pure polystyrene block portion may be found in the tapered segment of the midblock B. In the tapered segment, styrene monomer is copolymerized with butadiene and, as such, is "isolated" from the pure polystyrene blocks A and A' as well as the first segment of midblock B that comprises, preferably consists essentially of and more preferably consists of polymerized butadiene.

The ATBCs of the present invention may be used on their own or mixed with other polymers, particularly other styrenic block copolymers such as diblock and triblock copolymers, and styrenic polymers such as polystyrene, high impact polystyrene, acrylonitrile-butadiene-styrene copolymers (ABS), and styrene-acrylonitrile copolymers (SAN). When less transparency is desired or transparency is not necessary, the invention copolymers can be blended with polyolefins and/or olefin copolymers.

Blends of the invention polymers with polymers of styrene and 70 to 85 wt percent, based on blend weight, styrene-butadiene (SB) copolymers are particularly useful applications for the improved tapered block copolymers of this invention. Articles made from these blends have an advantageous combination of impact strength, practical toughness and clarity relative to comparable blends made with any of symmetric block copolymers, asymmetric non-tapered block copolymers or tapered symmetric block copolymers.

The presently preferred polymers of styrene employed in the blends of this invention are usually (a) homopolymers of styrene; or (b) copolymers of styrene as a major component with a minor amount, for example, up to 20 wt percent based on copolymer weight, of any other copolymerizable monovinyl aromatic compound other than styrene, such as alphamethylstyrene, vinyltoluene or para- tertiary-butyl styrene. A minor amount, for example, up to 20 wt percent based on copolymer weight, of other monomers such as methyl acrylate, methyl methacrylate, and acrylonitrile can be copolymerized with the styrene.

The block copolymers of the present invention can be blended with styrene resins made in bulk polymerization. These resins are commonly prepared by heating styrene and any comonomer at temperatures in the range of 100° to 200° C. with application of pressure, if necessary, to combine the monomers. The polymerization can also be carried out at lower temperatures by the addition of free-radical generating peroxidic catalysts such as benzoyl peroxide, acetyl peroxide, and di-t-butyl peroxide.

Alternatively, the polymerization can also be carried out in solution with precipitation of the product, if desired. Solvent can be removed by standard techniques such as steamstripping or solvent evaporation.

High impact polystyrene (HIPS) also can be successfully employed in blends with the invention copolymers. Suitable high impact polystyrenes can be prepared by polymerizing styrene in the presence of an elastomer, typically polybutadiene rubber. In these resins the styrene forms a continuous phase throughout which the rubber particles are dispersed.

Visually transparent three-component polymer blends can be made from (a) polystyrene, (b) SB block copolymers such as STYROLUX™ 684D or STYROLUX™ 693D commercially available from BASF; KRATON™ D-1401P commercially available from Kraton Polymers, FINACLEAR™ 520; commercially available from AtoFina; or a K-Resin™ polymer such as KR03, KR05 or XK-40 all commercially available from ChevronPhillips Chemical Company, and (c) an ATBC of the present invention. Component (b) typically has a nominal styrene content of 75 wt percent and a nominal butadiene content of 25 wt percent, both percentages being based upon component (b) weight and selected to total 100 wt percent. Component (b) may be a radial diblock copolymer, a linear block copolymer, a coupled diblock copolymer or a tapered diblock copolymer depending upon which process is used to prepare the block copolymer. The asymmetric tapered block copolymers of the present invention (c) yield visually transparent blends at higher loadings than conventional symmetric styrene-butadiene-styrene (SBS) block copolymers. For example, VECTOR™ 6507 SBS block copolymer, commercially available from Dexco Polymers, yields visually transparent three-component blends at loadings up to 5 wt percent, based upon total three-component blend weight. By way of contrast, an asymmetric tapered block copolymer of the present invention with the same or nearly the same molecular weight yields visually transparent three-component blends at loadings up to at least 10 wt percent, based upon three-component blend weight.

The blends of this invention can be prepared by any suitable means including blending, tumbling and extrusion. Examples of these methods include, but are not limited to, dry mixing in the form of a powder or pellets, wet mixing in the form of a solution or slurry, and melt extrusion compounding.

The polymers and any other ingredients or additives may be mechanically blended together in the desired proportions with the aid of any suitable mixing device conveniently used for mixing rubbers or plastics, such as, for example, a differential roll mill, a Banbury mixer, or an extruder.

In these types of blending methods the polymers and any other components and additives used can be in any form, such as, for example, fluff, powder, granulate, pellet, solution, slurry, and/or emulsion. Any additive can be combined with the polymers according to any method known in the art. Examples of incorporation methods include, but are not limited to, dry mixing in the form of a powder and wet mixing in the form of a solution or slurry.

Melt extrusion compounding can be carried out using any suitable method and apparatus such as a single screw or twin screw extruder or another melt extruder at temperatures above the melting point or glass transition temperature of the polymers.

The presently preferred method comprises blending the polymers in powder or granulate form and extruding the blend in sheet form to feed a thermoforming apparatus or as a direct feed to an injection or blow molder.

In order to facilitate thorough mixing of the polymers and to develop the desired combination of physical properties, pellets are generally metered by loss-in-weight feeders or by screw feeders at a temperature low enough to avoid softening the pellets. The metered pellets are dropped into an extruder which melts and blends the components to provide a homogenous melt.

Alternatively, solution blending methods known in the art may be used.

The ranges of amounts of polymers useful in blends varies according to the properties and economics required. For example, when an invention copolymer is blended with a polymer of styrene, practical ranges include using amounts such as from 10 wt percent to 70 wt percent, based on polymer weight of styrene, more usually from 20 wt percent to 65 wt percent, based on polymer weight of styrene, and most preferably from 30 wt percent to 60 wt percent, based on polymer weight of styrene with the balance being one or more of the polymodal resinous copolymer products of this invention. For a more particular example, when the invention copolymers are blended with general purpose polystyrene, broad ranges include using amounts such as from 10 wt percent to 70 wt percent polystyrene, more usually from 20 wt percent to 65 wt percent polystyrene, and most preferably from 30 wt percent to 60 wt percent polystyrene with the balance being one or more of the polymodal resinous copolymer products of this invention. Generally, use of too much of the invention copolymers in a blend would result in good properties but loss of economic advantage. Use of too little of the invention copolymers in a blend would result in loss of impact resistance. These blends can provide an economical route to gaining the desirable attributes of both polystyrene and the invention polymers while maintaining low haze in articles made from the blends.

The compositions of this invention or blends thereof with other polymers disclosed herein can be extruded, thermoformed, injection molded, blow molded, or made into films or sheets.

Articles made from the compositions of this invention are clear, tough, and have good impact strength and have other physical properties within acceptable ranges for such applications as drinking cups, lids, bottles, other food containers, medical drainage units, shrink wrap and over wrap. Articles made from blends of the copolymers of this invention can economically provide advantageous properties for similar applications.

The following examples illustrate, but do not in any way limit, the present invention. Arabic numerals represent examples (Ex) of the invention and letters of the alphabet designate comparative examples (Comp Ex). All parts and percentages are by weight unless otherwise stated. In addition, all amounts shown in the tables are based on weight of polymer contained in the respective compositions unless otherwise stated.

### Example (Ex) 1 and Comparative Examples (Comp Ex) A-E)

### Preparation of Example 1 (A-T-SBS)

In a stirred tank reactor, add 844 pounds (lbs) (382.8 kilograms (kg)) of cyclohexane solvent and preheat the contents of the reactor up to 65°C. Add 522 grams (g) of an initiator solution that contains 0.951 moles of lithium in the form of sec-butyllithium dissolved in cyclohexane. Add 21.1 lbs (9.57 kg) of a styrene monomer feedstream that is preheated to a temperature of 65°C through an alumina bed to remove stabilizer, water, and other impurities contained in the feedstream. Flush the alumina bed and lines with 100 lbs (45.4 kg) of cyclohexane. Allow the styrene to react for 15 minutes. Add 150.7 lbs (68.4 kg) of butadiene monomer preheated to a temperature of 65°C through an alumina bed to remove any impurities and, once again, flush the alumina bed and lines with 100 lbs (45.4 kg) of cyclohexane. One minute after completing addition of the butadiene, add 79.4 lbs (36.0 kg) of a styrene monomer feedstream that is preheated to a temperature of 65°C through the alumina bed to remove the stabilizer, water, and other impurities and, yet again, flush the alumina bed and lines with 100 lbs (45.4 kg) of cyclohexane. Allow reaction of reactor contents to go to completion, producing 251 lbs (113.9 kg) of a 120,000 grams per mole (g/mol) A-T-SBS block copolymer. Terminate living ends of the block copolymer by adding 63 g of isopropanol to the reactor. Neutralize the polymer with 54.8 g of a H₃PO₄ solution. Add 114 g of 4-[[4,6-bis(Octylthio)-5-triazin-2-yl]amino]-2,6-di-*tert*-butylphenol (commercially available from Ciba Specialty Chemicals Corporation under the trade designation IRGANOX™ 565) and 1118 g tris(nonylphenyl)phosphite (TNPP) (commercially available from GE Specialty Chemicals under the trade designation WESTON™ W399) as antioxidants to the polymer solution. Inject the polymer solution into a bath of water and steam to flash off the cyclohexane. Filter the resulting polymer crumb out of the water bath, and dry it in a 65°C oven for 12 hours.

### Preparation of Comparative Example A (A-SBS)

Using the same apparatus as that used to prepare the A-T-SBS block copolymer and a modification of the process used to prepare the A-T-SBS block copolymer, prepare an asymmetric SBS (A-SBS) block copolymer. As the initiator, use 527 g of an initiator solution that contains 0.959 moles of lithium in the form of n-butyllithium dissolved in cyclohexane. Instead of adding a second portion of styrene monomer one minute after finishing butadiene monomer addition, allow reaction of the butadiene to proceed for 15 minutes before adding the second portion of styrene monomer. The increased time, 15 minutes, rather than one minute, allows butadiene polymerization to proceed essentially to completion. Increase the amount of H₃PO₄ solution to 55.3 g. The modified process yields 251 lbs (113.9 kg) of a 120,000 g/mol of an A-SBS (untapered) block copolymer. Recover the A-SBS block copolymer in the same manner as detailed above for recovery of the A-T-SBS block copolymer.

### Preparation of Comparative Example B (T-SBS)

Using the same apparatus as that used to prepare the A-T-SBS block copolymer and a modification of the process used to prepare the A-T-SBS block copolymer, prepare a tapered SBS (T-SBS) block copolymer. Reduce the amount of cyclohexane solvent to 822 lbs (372.9 kg) and, as the initiator, use 373 g of an initiator solution that contains 0.680 moles of lithium in the form of n-butyllithium dissolved in cyclohexane. Increase the first addition of styrene monomer to 35.6 lbs (16.15 kg), reduce the butadiene monomer addition to 111.4 lbs (50.5 kg), and reduce the second addition of styrene monomer to 35.6 lbs (16.15 kg). In addition, reduce the amounts of isopropanol to 45 g, H₃PO₄ solution to 31.3 gm IRGANOX™ 565 to 104 g and TNPP to 813 g. The modified process yields 183lbs (82.8 kg) of a 120,000 g/mol of T-SBS (tapered) block copolymer. Recover the T-SBS block copolymer in the same manner as detailed above for recovery of the A-T-SBS block copolymer.

### Preparation of Comparative Example C (SBS)

Using the same apparatus as that used to prepare the A-T-SBS block copolymer and a modification of the process used to prepare the T-SBS block copolymer (Comparative Example B), prepare a SBS block copolymer. Instead of adding a second portion of styrene monomer one minute after finishing butadiene monomer addition, allow reaction of the butadiene to proceed for 15 minutes before adding the second portion of styrene monomer. The modified process yields 183 lbs (82.8 kg) of a 120,000 g/mol of a symmetric, untapered SBS block copolymer. Recover the SBS block copolymer in the same manner as detailed above for recovery of the T-SBS block copolymer.

Physical properties for an A-T-SBS block copolymer representative of the present invention are summarized in Table I below as Ex 1. Table I also includes physical property data for several comparative examples: an A-SBS block copolymer (Comp Ex A), a T-SBS block copolymer (Comp Ex B), a SBS block copolymer (Comp Ex C), a polystyrene resin (PS) commercially available from The Dow Chemical Company under the trade designation STYRON™ 685D (Comp Ex D), and a SB diblock copolymer commercially available from ChevronPhillips Chemical Company under the trade designation K-Resin™ KR05 (Comp Ex E). The modified melt flow rate (MFR) is measured at a temperature of 200°C with a 10 kilogram (kg) weight and a 0.1564 inch (3.97 millimeter (mm)) capillary diameter.

**Table I - Polymer Descriptions and Physical Properties**

| Ex/ Comp Ex | Polymer Type | Overall MW (kg/mol) | Overall Styrene Content (wt percent) | Percent Styrene in 1^{st} Block | Percent Styrene Tapered | Modified MFR (g/10 min) |
|---|---|---|---|---|---|---|
| 1 | A-T-SBS | 113.8 | 40.8 | 21.8 | 6.4 | 6.9 |
| A | A-SBS | 121.8 | 40 | 20.5 | 2.8 | 1.4 |
| B | T-SBS | 122.9 | 40 | 50 | 5.0 | 3.3 |
| C | SBS | 124.8 | 40 | 50 | 1.5 | 1.9 |
| D | PS | N/A | 100 | N/A | N/A | 112 |
| E | SB | N/A | 75 | N/A | N/A | 455 |

| | | | | | | |
|---|---|---|---|---|---|---|
| N/A means not applicable | | | | | | |

### Ex 2 and Comp Ex F-I

Prepare a series of dry resin polymer blends, each with a calculated rubber content of 12.5 wt percent, based on total blend weight, using resins selected from those identified in Table I. Weigh each resin component into a mixing container and, after all components are placed in the container, close the container and place it on a tumbling apparatus for a period of time sufficient to obtain a substantially uniform resin blend. Thirty (30) minutes typically yields a visually uniform blend. Table II shows the polymer composition of each of the blends.

**Table II - Polymer Blend Composition Data**

| | Comp Ex F | Comp Ex G | Ex 2 | Comp Ex H | Comp Ex I |
|---|---|---|---|---|---|
| SB (wt percent) | 50 | 25 | 25 | 25 | 25 |
| PS (wt percent) | 50 | 64.6 | 64.6 | 64.6 | 64.6 |
| SBS (wt percent) | 0 | 10.4 | 10.4 | 10.4 | 10.4 |
| SBS Type | none | A-SBS | A-T-SBS | T-SBS | SBS |

### Injection Molding

Convert the blends into injection molded parts (step chips, impact test discs and tensile bars) using a Mannesmann 100-ton Demag Injection Molding Machine, with a NCIII control system, and a 7-cavity family mold. The family mold includes a 0.060/0.100/0.125-inch (1.52/2.54/3.18 mm) thick step chip, an end-gated dog-bone tensile bar 6.5 inches (16.5 cm) long and 0.125 inches (3.18 mm) thick, an end-gated burn bar 5 inches (12.7 cm) long and 0.125 inches (3.18 mm) thick, a side-gated dog-bone tensile bar 6.5 inches (16.5 cm) long and 0.125 inches (3.18 mm) thick, a side-gated burn bar 5 inches (12.7 cm) long and 0.125 inches (3.18 mm) thick, a side-gated thick burn bar 5 inches (12.7 cm) long and 0.25 inches (6.35 mm) thick, and a 4-inch (10.16 cm) disk 0.125 inches (3.18 mm) thick. Rather than fill all mold cavities, block off the injection port for the thick burn bar.

The molding machine contains a 38 mm single-flighted extruder screw. Pour the dry blends into the machine's hopper. Set extruder barrel temperatures to 375°F (190°C), 385°F (196°C), and 395°F (202°C) for zones 1, 2, and 3 respectively, with a nozzle temperature of 405°F (207°C). Control the mold temperature at 110°F (43°C). Use a 1.10-second injection time, a hold pressure of 6278 pounds per square inch (psi) (43.3 megapascals (MPa)), a back pressure of 6278 psi (43.3 MPa) and a total cycle time of 45.8 seconds to form the parts. Discard parts from the first 15 cycles to line out the injection molding process and then evaluate samples from the next 16 mold cycles.

Use the disks for instrumented impact testing, the end-gated dog-bone tensile bars for tensile testing, the end-gated burn for flex testing, and the step chips for haze and transparency testing.

Subject the resulting articles to a visual examination to determine whether they show evidence of non-uniformities or splay. In addition, subject the resulting articles to percent haze evaluations according to ASTM D 1925 (similar to ASTM D 1003) using step chips of 60 mils (1.52 mm), 100 mils (2.54 mm) and 125 mils (3.18 mm) thick. In addition subject the 0.125-inch (3.18 mm) thick end-gated burn bars to flexural testing at 73°F (23°C) according to ASTM D 790 to determine average modulus (Mod_{avg}) (10⁵ pounds per square inch (psi)/megapascals (MPa), average strength (Str_{avg}) (psi/pascals (Pa) and average second modulus (Mod-2_{avg}) (10⁵ psi/MPa), where Mod-2 is the secant modulus from 0 to 1 percent elongation. Also at 73°F (23°C) and in accordance with ASTM D 3763, determine average peak load (PL_{avg}) in pounds (lbs) or kilograms (kg) and average total energy (Toteng_{avg}) in inch-pounds (in-lb) or Newton-meters (N-m). Finally, use ASTM D 638 to determine, at 73°F (23°C), average modulus (Mod_{avg}) (10⁵ psi/MPa), average yield strength (YS_{avg}) (psi/Pa), average yield elongation (YE_{avg}) (percent), average break strength (BS_{avg}) (psi/Pa), average break at elongation (BE_{avg}) (percent) and average tensile strength (TS_{avg}) (psi/Pa) on the 0.125-inch (3.18 mm) thick end-gated dog-bone tensile bars. In each case, the average is an arithmetic average of 5 samples. Summarize the data in Table III.

**Table III - Injection Molded Blend Data**

| | Comp Ex F | Comp Ex G | Ex 2 | Comp Ex H | Comp Ex I |
|---|---|---|---|---|---|
| Clarity Testing: | | | | | |
| Non-uniformities | No | Yes | No | Yes | Yes |
| Splay | No | No | No | Yes | Yes |
| percent Haze 60 mil (1.5 mm) | 3.52 | 62.29 | 34.30 | 87.14 | 88.28 |
| percent Haze 100 mil (2.5 mm) | 5.72 | 77.84 | 48.90 | 94.54 | 95.09 |
| percent Haze 125 mil (3.2 mm) | 7.33 | 82.75 | 55.37 | 96.33 | 96.53 |

| Flex Testing: | | | | | |
|---|---|---|---|---|---|
| Avg Flex Mod (10⁵ psi/MPa) | 4.002/ 2759.3 | 3.591/ 2475.9 | 3.717/ 2562.8 | 3.690/ 2544.2 | 3.672/ 2531.8 |
| Avg Flex Str (psi/MPa) | 10543/ 72.7 | 9968/ 68.7 | 10665/ 73.5 | 10301/ 71.0 | 10215/ 70.4 |
| Mod-2 Avg (10⁵ psi/MPa) | 3.978/ 2742.7 | 3.580/ 2468.3 | 3.704/ 2553.8 | 3.680/ 2537.3 | 3.664/ 2526.2 |
| Impact Resistance: | | | | | |
| Avg Peak Load (lb/kg) | 96.6/ 43.9 | 200.4/ 91.1 | 209.2/ 95.1 | 186.3/ 84.7 | 200.6/ 91.2 |
| Avg Tot Eng (in-lb/newton meter (N.m)) | 18.1/ 2.04 | 42.6/ 4.81 | 32.9/ 3.72 | 33.6/ 3.80 | 34.0/ 3.84 |

| Tensile Testing: | | | | | |
|---|---|---|---|---|---|
| Avg tensile Mod (10⁵ psi/MPa) | 3.06/ 2109.8 | 3.38/ 2330.4 | 3.58/ 2468.3 | 3.43/ 2364.9 | 3.45/ 2378.7 |
| YSavg (psi/MPa) | 5970/ 41.2 | 6207/ 42.8 | 6240/ 43.0 | 6189/ 42.7 | 6217/ 42.9 |
| YEavg (percent) | 2.4 | 2.6 | 2.6 | 2.8 | 2.6 |
| BSavg (psi/Pa) | 5374/ 37.0 | 5523/ 38.1 | 5482/ 37.8 | 6003/ 41.4 | 5831/ 40.2 |
| EBavg (percent) | 5 | 7 | 7 | 5 | 6 |
| TSavg (psi/MPa) | 5970.1 40.7 | 6207.2/ 42.8 | 6240.1 43.0 | 6189.4/ 42.7 | 6217.5/ 42.9 |

Convert the blends into cast sheets using a 1.5-inch (38 mm) diameter Killion sheet extrusion line. The extruder contains a barrier screw with a Maddox mixer on the tip. A gear pump is attached to the nose of the extruder. The extruder die has a 14-inch (35.6 cm) wide flex-lip die with an internal choke bar. Position the die to extrude horizontally into a vertical roll stack containing three chrome-plated, temperature-controlled rolls.

Add dry blends, prepared as stated above, to the extruder's hopper. Control the extruder's three extruder zones at set temperatures of 320°F (160°C), 350°F (177°C) and 380°F (193°C) from feed to nose, respectively. Control the clamp and adapter at a set temperature of 380°F (193°C), and the gear pump and die zones at a set temperature of 400°F (204°C). The extruder screw rotates at 106 revolutions per minute (rpm) giving a melt temperature of 404°F (207°C) and head pressure of 2500 to 3000 psi (17.2 to 20.7 MPa). Run the gear pump at 1100 rpm with a suction pressure of 500 to 600 psi (3.4 to 4.1 I MPa) and a discharge pressure of 900 to 950 psi (6.2 to 6.6 MPa). Set the die gap to 0.060 inches (1.52 mm). Adjust the roll gap to maintain a small bank of heat-plastified polymer, a sheet thickness of 0.058 inches (1.47 mm) and a sheet width of 13.5 inches (34.3 cm). Subject the resulting sheets to the same tests as described for the injection molded articles and summarize the data in Table IV.

**Table IV - Cast Sheet Data**

| | Comp Ex F | Comp Ex G | Ex 2 | Comp Ex H | Comp Ex I |
|---|---|---|---|---|---|
| Clarity Testing: | | | | | |
| percent Haze | 6.64 | 59.25 | 42.70 | 87.57 | 93.42 |
| Flex Testing: | | | | | |
| Avg Flex Mod (10⁵ psi/MPa) | 1.843/ 1270.7 | 3.636/ 2506.9 | 3.758/ 2591.0 | 3.469/ 2391.8 | 3.130/ 2158.0 |
| Avg Flex Str (psi/Pa) | 3855/ 26.6 | 7511/ 51.8 | 7795/ 53.7 | 7067/ 48.7 | 6577/ 45.3 |
| Mod-2 Avg (10⁵ psi/MPa) | 1.903/ 1312.1 | 3.644/ 2512.4 | 3.765/ 2595.9 | 3.466/ 2389.7 | 3.132/ 2159.4 |

| Impact Resistance: | | | | | |
|---|---|---|---|---|---|
| Avg Peak Load (lb/kg) | 49.6/ 22.5 | 60.9/ 27.7 | 67.6/ 30.7 | 86.9/ 39.5 | 70.9/ 32.2 |
| Avg Tot Eng (in-lb/newton meter (N.m)) | 4.2/ 0.474 | 6.1/ 0.689 | 5.9/ 0.667 | 4.2/ 0.474 | 5.5/ 0.621 |

| Tensile Testing: | | | | | |
|---|---|---|---|---|---|
| Avg tensile Mod (10⁵ psi/MPa) | 2.42/ 1668.5 | 3.19/ 2199.4 | 3.12/ 2151.2 | 3.22/ 2220.1 | 2.66/ 1834.0 |
| YSavg (psi/Pa) | 3967/ 27.4 | 5074/ 35.0 | 5366/ 37.0 | 4974/ 34.3 | 4206/ 29.0 |
| YEavg (percent) | 2.3 | 1.8 | 2.0 | 1.9 | 2.0 |
| BSavg (psi/MPa) | 3312/ 22.8 | 4158/ 28.7 | 4441/ 30.6 | 4401/ 30.3 | 3671/ 25.3 |
| EBavg (percent) | 18 | 29 | 17 | 43 | 39 |
| TSavg (psi/MPa) | 3966.8/ 27.4 | 5073.9/ 35.0 | 5370.3/ 37.0 | 4977.6/ 34.3 | 4207.0/ 29.0 |

### Biaxially Oriented Sheet Stretching

Convert the blends into biaxially stretched sheets with stretch ratios of 3.4 in the machine direction (MD) versus 3.0 in the transverse direction (TD) using a T. M. Long Filmstretcher machine. The machine, capable of independently stretching a sheet in both length and width, stretches precut squares (4.25 inch by 4.25-inch (10.8 cm by 10.8 cm)) of cast sheet in two directions at a preset temperature to a preset stretch ratio at a preset rate. Clamp the squares into a frame with 13 air-actuated clamps on each side of the square and place the frame and film into the machine's oven that is maintained at a preset temperature of 140°C over a preheat plate that is maintained at a set temperature of 125°C. Close the oven door and allow preheating to occur over a period of 90 seconds before stretching the sheet simultaneously in both the MD and the TD at a rate of 0.15 inches/second (3.81 mm/second) to the above stretch ratios. MD is defined as along the length of a cast film sheet and TD is defined as perpendicular to the MD or across the width of a cast film sheet.

Subject the biaxially stretched sheets to physical property testing to determine percent Haze, via ASTM D 1925 (similar to ASTM D 1003), the following tensile properties in both MD and TD: 1 percent secant modulus (1 percent sec mod) in (10⁵ psi/MPa), 2 percent sec mod (10⁵ psi/MPa), average modulus thickness (MT_{avg}) in inches/millimeters (in/mm), average tensile thickness (IT_{avg}) in in/mm, YS_{avg}, YE_{avg}, BS_{avg}, BE_{avg} and calculated overall thickness in in/mm, all in accordance with ASTM D 882. Summarize the physical property testing data in Table V.

**Table V - Physical Property Data for Biaxially Oriented Sheets**

| | Comp Ex F | Comp Ex G | Ex 2 | Comp Ex H | Comp Ex I |
|---|---|---|---|---|---|
| Clarity Testing: | | | | | |
| percent Haze | 4.54 | 6.49 | 5.59 | 6.09 | 6.96 |

| MD Tensile Testing: | | | | | |
|---|---|---|---|---|---|
| Avg Mod Thick (in/mm) | 0.0027/ 0.069 | 0.0030/ 0.076 | 0.0037/ 0.094 | 0.0031/ 0.079 | 0.0033/ 0.084 |
| Avg percent Sec Mod (10⁵ psi/MPa) | 2.539/ 1750.6 | 2.572/ 1773.3 | 2.508/ 1729.2 | 2.603/ 1794.7 | 2.477/ 1707.8 |
| Avg 2 percent Sec Mod (10⁵ psi/MPa) | 2.501/ 1724.4 | 2.479/ 1709.2 | 2.406/ 1685.9 | 2.538/ 1749.9 | 2.489/ 1716.1 |
| Avg Tensile Thick (in/mm) | 0.0023/ 0.058 | 0.0026/ 0.066 | 0.0038/ 0.097 | 0.0036/ 0.091 | 0.0028/ 0.071 |
| Avg Yield Strength (psi/MPa) | 6420.0/ 44.3 | 6309.8/ 43.5 | 6279.0/ 43.3 | 6431.2/ 44.3 | 6531.8/ 45.0 |
| Yield Elong (percent) | 2.9 | 3.0 | 3.1 | 3.0 | 2.9 |
| Avg Break Strength (psi/MPa) | 7442.7/ 51.3 | 7002.0/ 48.3 | 6306.2/ 43.5 | 6632.1/ 45.7 | 6806.1/ 46.9 |
| Avg Break at Elongation (percent) | 105.6 | 85.1 | 95.3 | 79.8 | 80.3 |

| TD Tensile Testing: | | | | | |
|---|---|---|---|---|---|
| Avg Mod Thick (in/mm) | 0.0038/ 0.097 | 0.0036/ 0.091 | 0.0046/ 0.117 | 0.0029/ 0.074 | 0.0024/ 0.061 |
| Avg percent Sec Mod (10⁵ psi/MPa) | 2.359/ 1626.5 | 2.321/ 1600.3 | 2.200/ 1516.8 | 2.493/ 1719.9 | 2.421/ 1669.2 |
| Avg 2 percent Sec Mod (10⁵ psi/MPa) | 2.160/ 1489.3 | 2.255/ 1554.8 | 2.110/ 1454.8 | 2.450/ 1689.2 | 2.428/ 1674.0 |
| Avg Tensile Thick (in/mm) | 0.0023/ 0.058 | 0.0024/ 0.061 | 0.0046/ 0.117 | 0.0031/ 0.079 | 0.0026/ 0.066 |
| Avg Yield Strength (psi/MPa) | 5996.2/ 41.3 | 5786.4/ 39.9 | 5467.5/ 37.7 | 5621.9/ 38.8 | 6095.4/ 42.0 |
| Yield Elong (percent) | 2.8 | 2.7 | 2.8 | 2.7 | 2.8 |
| Avg Break Strength (psi/MPa) | 6103.9/ 42.1 | 6606.0/ 45.5 | 4567.8/ 31.5 | 6341.9/ 43.7 | 6438.9/ 44.4 |
| Avg Break at Elongation (percent) | 113.6 | 103.7 | 70.9 | 110.2 | 99.0 |
| Calculated Avg Overall Thickness (in/mm) | 0.00278/ 0.071 | 0.00290/ 0.073 | 0.00418/ 0.106 | 0.00318/ 0.081 | 0.00278/ 0.071 |

### Thermoformed Cups

Convert cast sheets of the blends into thermoformed cups using an Irwin thermoforming machine equipped with platens that contain male and female molds for a 16 ounce (0.473 liter) cup. The machine includes a preheat oven with upper radiant heaters set at 640°F (338°C) and lower radiant heaters set at 600°F (316°C). Use a 4 second cycle time (measured from onset of platen opening prior to beginning insertion of preheated sheet between the platens to onset of platen opening prior to beginning insertion of a succeeding preheated sheet between the platens). The thermoforming machine produces cup shapes in a cast sheet. Separate the cup shapes from the sheet in a separate, off-line operation, but do not ring roll cup lips. Evaluate percent Haze for both the sidewall and the bottom of the cups in accordance with ASTM D 1925 (similar to ASTM D 1003) and subject the cups to sidewall compression strength testing using an Instron tensile testing machine in compression mode against the sidewall of the cups supported on their side. Summarize the physical property testing data in Table VI.

**Table VI - Physical Property Data for Thermoformed Cups**

| | Comp Ex F | Comp Ex G | Ex 2 | Comp Ex H | Comp Ex I |
|---|---|---|---|---|---|
| Clarity Testing: | | | | | |
| percent Haze Sidewall | 5.78 | 11.44 | 10.18 | 19.83 | 30.86 |
| percent Haze Bottom | 3.58 | 20.99 | 9.06 | 48.12 | 47.50 |

| Compression Testing: | | | | | |
|---|---|---|---|---|---|
| Avg Peak Load (lb/kg) | 61.5/28.0 | 75.0/34.1 | 70.3/32.0 | 72.9/33.1 | 69.1/31.4 |
| Avg Tot Energy (in-lb/newton meter (N.m)) | 6.0/0.68 | 6.5/0.73 | 8.4/0.95 | 6.3/0.71 | 8.3/0.94 |

The data contained in Tables III - VI demonstrate that the asymmetric tapered SBS block copolymers of the present invention generally improve impact resistance over that of a 50/50 weight/weight blend of polystyrene (PS) and a styrene/butadiene (SB) diblock copolymer, but do so with a lower increase in haze than an asymmetric SBS block copolymer, a tapered SBS block copolymer or a symmetric SBS block copolymer.

## Claims

1. An asymmetric, tapered monoalkenyl arene-conjugated diene-monoalkenyl arene block copolymer having a linear structure A--B--A', where A is a first end block of polymerized monoalkenyl arene, end block A having a molecular weight within a range of from 5,000 to 20,000, B is a polymer block that results from a process that lacks a randomizer and has a first segment that comprises polymerized conjugated diene and a second segment that is tapered and comprises a polymerized combination of both conjugated diene and monoalkenyl arene, the tapered segment including from greater than 0 to 50 percent by weight of all monoalkenyl arene contained in the block copolymer, polymer block B having a molecular weight within a range of from 28,000 to 212,500, and A' is a second polymer end block of polymerized monoalkenyl arene, end block A' having a molecular weight within a range of from more than 25,000 to 157,500, the block copolymer having an overall molecular weight within a range of from 80,000 to 250,000, and a monoalkenyl arene content within a range of from 30 to 55 percent by weight, based on copolymer weight, and the monoalkenyl arene content plus the conjugated diene content equals 100 percent by weight.

2. The block copolymer of Claim 1, wherin the monoalkenyl arene is styrene.

3. The block copolymer of Claim 1 or Claim 2, wherein the conjugated diene is butadiene, isoprene or a combination of butadiene and isoprene.

4. The block copolymer of Claim 1 or Claim 2, wherein the block copolymer has a molecular weight within a range of from 100,000 to 180,000.

5. The block copolymer of Claim 1 or Claim 2, wherein the end block A' has a molecular weight within a range of from 25,000 to 90,000.

6. The block copolymer of Claim 1 or Claim 2, wherein end block A has a molecular weight within a range of from 7,000 to 15,000.

7. The block copolymer of Claim 1, wherein block B has a molecular weight within a range of from 45,000 to 135,000.

8. A polymer blend composition, the composition comprising a polystyrene resin, a styrene-butadiene block copolymer and the asymmetric, tapered monoalkenyl arene-conjugated diene-monoalkenyl arene block copolymer of Claim 1, the blend composition having a clarity, measured in accord with ASTM D 1925 of at least 50 percent.

9. The composition of Claim 8 comprising from 0 to less than 100 percent by weight polystyrene resin, from 0 to less than 100 percent by weight styrene-butadiene block copolymer and from greater than 0 to 40 percent by weight of tapered block copolymer, all percentages being based upon blend weight and selected to total 100 percent.

10. A thermoformable oriented monoalkenyl arene polymer sheet comprising the polymer blend of Claim 8 or Claim 9.

## Patentansprüche

1. Asymmetrisches, verjüngtes Monoalkenylaren-Blockcopolymer aus Monoalkenylaren und konjungiertem Dien mit einer linearen Struktur A-B-A', wo A ein erster Endblock aus polymerisiertem Monoalkenylaren ist, wobei der Endblock A ein Molekulargewicht im Bereich von 5.000 bis 20.000 hat, B ein Polymerblock ist, der aus einem Verfahren ohne Randomisierungsmittel resultiert und ein erstes Segment besitzt, das polymerisiertes konjugiertes Dien umfasst, und ein zweites Segment, das verjüngt ist und eine polymerisierte Kombination aus konjugiertem Dien und Monoalkenylaren umfasst, wobei das verjüngte Segment von größer als 0 bis 50 Gew.-% das gesamten in dem Blockcopolymer enthaltenen Monoalkenylarens aufweist, Polymerblock B ein Molekulargewicht im Bereich von 28.000 bis 212.500 hat und A' ein zweiter Polymerendblock aus polymerisiertem Monoalkenylaren ist, wobei Endblock A' ein Molekulargewicht im Bereich von mehr als 25.000 bis 157.500 hat, wobei das Blockcopolymer ein Molekulargewicht insgesamt im Bereich von 80.000 bis 250.000 hat und einen Monoalkenylarengehalt im Bereich von 30 bis 55 Gew.-%, bezogen auf das Copolymergewicht, und wobei der Monoalkenylarengehalt plus der Butadiengehalt gleich 100 Gew.-% ist.

2. Blockcopolymer nach Anspruch 1, wobei das Monoalkenylaren Styrol ist.

3. Blockcopolymer nach Anspruch 1 oder Anspruch 2, wobei das konjugierte Dien Butadien, Isopren oder eine Kombination von Butadien und Isopren ist.

4. Blockcopolymer nach Anspruch 1 oder Anspruch 2, wobei das Blockcopolymer ein Molekulargewicht im Bereich von 100.000 bis 180.000 hat.

5. Blockcopolymer nach Anspruch 1 oder Anspruch 2, wobei der Endblock A' ein Molekulargewicht im Bereich von 25.000 bis 90.000 hat.

6. Blockcopolymer nach Anspruch 1 oder Anspruch 2, wobei der Endblock A ein Molekulargewicht im Bereich von 7.000 bis 15.000 hat.

7. Blockcopolymer nach Anspruch 1, wobei der Block B ein Molekulargewicht im Bereich von 45.000 bis 135.000 hat.

8. Polymermischungszusammensetzung, wobei die Zusammensetzung ein Polystyrolharz, ein Styrol-Butadien-Blockcopolymer und das asymmetrische, verjüngte Monoalkenylaren-Blockcopolymer aus Monoalkenylaren und konjugiertem Dien nach Anspruch 1 umfasst, wobei die Mischungszusammensetzung eine gemäß ASTM D 1925 gemessene Transparenz von mindestens 50 Prozent besitzt.

9. Zusammensetzung nach Anspruch 8, die von 0 bis weniger als 100 Gew.-% Polystyrolharz, von 0 bis weniger als 100 Gew.-% Styrol-Butadien-Blockcopolymer und von größer als 0 bis 40 Gew.-% verjüngtes Blockcopolymer umfasst, wobei alle Prozentsätze auf das Gewicht der Mischung bezogen sind und so gewählt sind, dass sich insgesamt 100 Prozent ergeben.

10. Thermoformbare Folie aus orientiertem Monoalkenylarenpolymer, welche die Polymermischung nach Anspruch 8 oder Anspruch 9 umfasst.

## Revendications

1. Copolymère à blocs (monoalcényl-arène)-(diène conjugué)-(monoalcényl-arène), asymétrique et à gradient de composition, présentant une structure linéaire A—B—A' dans laquelle A représente un premier bloc terminal constitué d'un monoalcényl-arène polymérisé, lequel bloc terminal A présente une masse moléculaire située dans l'intervalle allant de 5 000 à 20 000, B représente un bloc polymère qui résulte d'un processus réalisé sans randomiseur et qui comporte un premier segment, constitué d'un diène conjugué polymérisé, et un deuxième segment à gradient de composition, constitué d'un diène conjugué et d'un monoalcényl-arène polymérisés ensemble, lequel segment à gradient contient de plus de 0 à 50 % en poids de tout le monoalcényl-arène contenu dans le copolymère à blocs, et lequel bloc polymère B présente une masse moléculaire située dans l'intervalle allant de 28 000 à 212 500, et A' représente un deuxième bloc polymère terminal constitué d'un monoalcényl-arène polymérisé, lequel bloc terminal A' présente une masse moléculaire située dans l'intervalle allant de plus de 25 000 à 157 500, lequel copolymère à blocs présente une masse moléculaire globale située dans l'intervalle allant de 80 000 à 250 000 et contient du monoalcényl-arène en une quantité représentant de 30 à 55 % du poids du copolymère, la somme de la teneur en monoalcényl-arène et de la teneur en diène conjugué étant égale à 100 % en poids.

2. Copolymère à blocs conforme à la revendication 1, dans lequel le monalcényl-arène est du styrène.

3. Copolymère à blocs conforme à la revendication 1 ou 2, dans lequel le diène conjugué est du butadiène, de l'isoprène ou une combinaison de butadiène et d'isoprène.

4. Copolymère à blocs conforme à la revendication 1 ou 2, lequel copolymère à blocs présente une masse moléculaire située dans l'intervalle allant de 100 000 à 180 000.

5. Copolymère à blocs conforme à la revendication 1 ou 2, dans lequel le bloc terminal A' présente une masse moléculaire située dans l'intervalle allant de 25 000 à 90 000.

6. Copolymère à blocs conforme à la revendication 1 ou 2, dans lequel le bloc terminal A présente une masse moléculaire située dans l'intervalle allant de 7 000 à 15 000.

7. Copolymère à blocs conforme à la revendication 1, dans lequel le bloc B présente une masse moléculaire située dans l'intervalle allant de 45 000 à 135 000.

8. Composition d'alliage de polymères, laquelle composition comprend une résine de type polystyrène, un copolymère à blocs de styrène et butadiène, et un copolymère à blocs (monoalcényl-arène)-(diène conjugué)-(monoalcényl-arène) asymétrique et à gradient de composition, conforme à la revendication 1, et laquelle composition d'alliage présente une clarté, mesuré selon la norme ASTM D 1925, d'au moins 50 %.

9. Composition conforme à la revendication 8, qui comprend de 0 à moins de 100 % en poids de résine de type polystyrène, de 0 à moins de 100 % en poids de copolymère à blocs de styrène et butadiène, et de plus de 0 à 40 % en poids de copolymère à blocs et à gradient de composition, tous ces pourcentages étant rapportés au poids de l'alliage et choisis de telle sorte que leur total soit égal à 100 %.

10. Feuille thermoformable de polymère de monoalcényl-arène orienté, comprenant un alliage de polymères conforme à la revendication 8 ou 9.
